# EUROPEAN PATENT APPLICATION

(11) **EP 3 372 086 A1**
(43) Date of publication of application: **12.09.2018**
(21) Application number: 17206080.8
(22) Date of filing: 08.12.2017
(51) Int. Cl.: A21D 2/02

(54) **SODIUM FREE BAKING POWDER**

(30) Priority: 08.03.2017 US 201762468426 P
(71) Applicant: Jungbunzlauer Ladenburg GmbH, 68526 Ladenburg (DE)
(72) Inventor: Lubasch, Katrin, 69126 Heidelberg (DE); Siebenrock, Christine, 79639 Grenzach-Wyhlen (DE); Lenz, Dirk, 4059 BASEL (CH); Mason, Robert, Bridgeton, MO 63043 (US)
(74) Representative: Zellentin & Partner mbB Patentanwälte

(57) **Abstract**

Sodium free baking powder comprising potassium bicarbonate and coated glucono delta lactone, doughs containing a sodium free baking powder comprising potassium bicarbonate and coated glucono delta lactone, bakery products made with a sodium free baking powder comprising potassium bicarbonate and coated glucono delta lactone and a method of leavening doughs with a sodium free baking powder comprising potassium bicarbonate and coated glucono delta lactone.

## Description

The present invention relates to a sodium free baking powder, doughs containing it, bakery products made with the baking powder and a method of leavening doughs with it.

All bakery products need a leavening agent or system to provide bulk to the dough. The oldest approaches are yeast and sour dough. In the 19^{th} century baking powder was developed, that acts much faster and is easier to store and handle due to its powdery consistency. Baking powders develop carbon dioxide by reaction of a carbon dioxide source with an acidifier. Several baking powders were developed, the first approaches concentrated on use in bakeries for bread. Later August Oetker made baking powder very popular by filling it into sachets and promoting it for baking cake at home.

Today, baking powders comprise sodium bicarbonate or, less frequently, potassium bicarbonate, as the carbon dioxide source and tartaric acid, sodium acid pyrophosphate, or monocalcium phosphate and sodium aluminum sulfate as acidifier. When phosphate free compositions are desired glucono delta lactone and calcium citrate are also used as acidifier. For industrial use, mixtures of sodium bicarbonate and sodium acid pyrophosphate are most common. In addition to the active ingredients, especially baking powder for household use contains starch to bind humidity and ease dosing.

For quite a long time now, sodium in food has been a concern. It is believed that too high sodium intake provokes or worsens high blood pressure. Therefore, efforts are undertaken to replace sodium. While replacing sodium bicarbonate with potassium bicarbonate is not problematic for baking powders, the acidifier is more critical. Many doughs react sensitively to an exchange of sodium acid pyrophosphate by other acidifiers, especially industrial doughs.

Nonetheless, numerous proposals for different baking powders exist. An early proposal for a sodium free baking powder is found in EP 362 181 A2 which describes a combination of stabilized, X ray amorphous calcium carbonate and a leavening acid. As the leavening acid sodium acid pyrophosphate, sodium aluminum sulfate, monocalcium phosphate, dicalcium phosphate, sodium aluminum phosphate, fumaric acid, citric acid and mixtures thereof are mentioned.

Other specific baking powders are known. For example, EP 588 496 A1 teaches the addition of citric acid combined with one of calcium hydroxide, calcium oxide, and calcium carbonate to yeast raised doughs intended for microwave ovens. US 7,250,187 B2 teaches mixing encapsulated chemical leavening agents into a dough with reduced shear to protect the encapsulation by a degradable barrier material applied to control the reaction of the leavening agent until a time during baking.

CN 102132713 A and CN 105433069 A aim at eliminating aluminum. The first proposes a baking powder comprising by weight: 35-40% of sodium hydrogen carbonate, 18-23% of glucolactone, 10-15% of calcium carbonate, 8-13% of starch, 4-8% of glycerin monostearate, 4-8% of phospholipids, 2-5% of citric acid and 2-5% of tartaric acid, wherein 1-2% in percentage by weight of ascorbyl palmitate is added. The second uses 30-40% of sodium bicarbonate, 20-30% of disodium dihydrogen pyrophosphate, 10-20% of calcium carbonate, 5-10% of calcium dihydrogen phosphate, 5-10% of citric acid, 5-10% of gluconic acid-delta-pivalolactone, 5-10% of corn starch, 0.1-0.5% of vitamin C, 0.01-0.05% of fungal amylase, 0.01-0.05% of xylanase and 0.01-0.05% of lipase as a baking additive with the dual effects of modifier and a leavening agent.

None of these proposals provides a baking powder suitable for industrial use that has the same leaving effect as the most commonly used baking powder from sodium bicarbonate and sodium acid pyrophosphate and good storage stability. Efficacy of substitute mixtures often shows negative effects on some doughs. Therefore, the object remains to provide a storage stable sodium free baking powder.

It was now surprisingly found that a combination of potassium bicarbonate and coated glucono delta lactone can solve the problems. The mixture is effective and efficacy is not lost during storage. Further, the coating can be used to adjust the rate of reaction, i.e. how far the reaction proceeds during mixing of the dough before baking.

Thus, the present invention solves the above object by providing a sodium free baking powder comprising potassium bicarbonate and coated glucono delta lactone. The object is further solved by doughs containing a sodium free baking powder comprising potassium bicarbonate and coated glucono delta lactone, bakery products made with a sodium free baking powder comprising potassium bicarbonate and coated glucono delta lactone and a method of leavening doughs with a sodium free baking powder comprising potassium bicarbonate and coated glucono delta lactone.

The potassium bicarbonate used according to the invention is known as such for baking powder use. Naturally, a food grade material is used. It has to have an appropriate particle size distribution. As a rule particles with a D₅₀ from 10 to 300 µm, preferably from 100 to 150 µm, are well suited. The maximum particle size is preferably lower than or equal to 500 µm, more preferred lower than or equal to 400 µm and most preferred lower than or equal to 300 µm. The amount of particles with a size lower than 100 µm is preferably ≤ 15 % by weight, more preferably < 10%. If needed, the particle size of the potassium bicarbonate can be adjusted by milling and/or sieving. Otherwise no special requirements are applicable. The storage stability of the combination of KHCO₃, which is very hygroscopic compared to NaHCO₃, and gluconco delta lacton is the better the lower the small particles size fraction < 100 µm of KHCO₃ is.

Suitable potassium bicarbonate is commercially available e.g. from Kudos Blends Ltd., GB, under the tradename KUDOS, from Dwight and Church, Co., Inc., USA, under the tradename Flow K and from Evonik Industries AG, DE. These grades have the particle size distribution as described in the following table 1. A preferred particle size distribution for the potassium bicarbonate is also shown in table 1. All percentages are by weight.

**Table 1**

| | | | | |
|---|---|---|---|---|
| size [µm] | < 100 | 100 - 300 | 300 - 400 | > 400 |
| amount in Evonik FK grade | 8.4 % | 45.2 % | 20.1 % | 26.4 % |
| amount in Church & Dwight Flow K | 38.1 % | 60.0 % | 1.6 % | 0.1 % |
| preferred amount | < 15 % | > 73 % | < 10 % | < 2 % |
| more preferred amount | < 10 % | > 79 % | < 10 % | < 1 % |
| most preferred amount | < 4 % | > 93 % | < 2 % | < 1 % |

The second component of the baking powder according to the invention is a coated glucono delta lactone. The coating consists preferably of an hydrogenated edible oil, more preferred a vegetable oil, for example hydrogenated palm oil, rape seed oil, cotton seed oil, sunflower oil or soybean oil. The coated glucono delta lactone is also provided in a suitable particle size distribution and purity. The typical particle size distribution of glucono delta lactone F2500 from Jungbunzlauer International AG, CH, (used for baking) is 1.4 %< 100 µm, 94.6 % 100 - 250 µm, 3.6 % 250 - 300 µm, 0.1 % 300 - 400 µm, and 0.1% > 400 µm. Preferably, particles of the glucono delta lactone have a maximum maximum particle size of ≤ 500 µm, more preferred ≤ 300 µm, most preferred ≤ 250 µm, and ≤ 2 % by weight of particles smaller than 80 µm and ≤ 7 % by weight of particles smaller than 100 µm.

The coated glucono delta lactone has preferably a maximum weight percentage of particle sizes of > 500 µm of < 15%, preferably of < 12%, most preferred < 5%, and/or preferably ≤ 2 % by weight of particles smaller than 100 µm.

Process for coating:
A modern fluidized bed system is used for the coating process. Hydrogenated vegetable oil is heated and used as the liquid phase to spray it onto the solid glucono delta lactone particles. The thickness of the coating can be adjusted via the retention time of the solid particles in the coating zone. A useful amount of coating ranges from 5 % by weight to 30 % by weight, preferably from 10 % by weight to 25 % by weight with respect to the total weight of the particles.

The baking powder according to the invention typically contains potassium bicarbonate and glucono delta lactone in a weight ratio from 1:1 to 1:2.5, preferably from 1:1.5 to 1:2.0, and most preferred from 1:1.75 to 1:1.85. For calculation the coating is not included into the amount of glucono delta lactone, i.e. the weight of the glucono delta lactone has to be corrected for the amount of coating.

It is beneficial to add additives like anti-caking agents to the potassium bicarbonate according to the invention due to its hygroscopic properties. Typically, one or more of silicon dioxide, calcium stearate and MgO are used. The amount of such an additive is below 2 % by weight, preferably below 1.5 % by weight and often below 1 % by weight of the potassium bicarbonate.

For industrial use the baking powder according to the invention is usually supplied in containers and comprises wheat or corn starch. In the industrial context the components of the baking powder are also stored with other components in a premix with flour, which has a usual residual humidity of up to 15 wt.-%. When the baking powder is intended for household use, smaller jars - preferably with a dosing aid - or sachets containing the appropriate amount for 500 g flour are the usual packaging. Small sachets of 17 g - 20 g are the equivalent for baking of recipes with 500 g of flour baking mix. It is an advantage of the baking powder according to the invention that it is not sensitive to humidity during storage. No or only very minor clotting and loss of efficacy is observed.

The dough according to the invention contains the baking powder according to the invention instead of traditional baking powder. It may contain additional leavening agents like yeast or sour dough, but no other chemical leavening agents are contained. Otherwise, the dough can comprise the same ingredients as dough for use with a baking powder from sodium bicarbonate and sodium acid pyrophosphate. The manufacturing of the dough can also remain the same.

The baking powder dosages typically range from 2.0 to 5.0 % by weight of the flour weight, preferably from 2.8 to 4.6 % by weight. As usual, they are adapted for specific doughs according to the leavening power desired.

Dough making follows the usual procedure, no special measures have to be taken, the baking powder according to the invention can be used exactly like the standard baking powder. The specific procedure varies widely, as it is adapted to the vast variety of baked goods. Typically, the ingredients are scaled and mixed together in the prescribed order. The ususal method for two exemplary doughs is summarized in the following.

Procedure of making muffins:
Scale the dry ingredients consisting of flour, sugar, dry milk, and salt into a mixing bowl, add the baking powder, scale the liquid ingredients consisting of vegetable oil, water and sugar to the other ingredients and mix them until a homogenous dough is formed. The dough is filled into a baking cup and the muffins are baked in a conventional oven at 175 to 180 °C for 21-25 min. The muffins are removed out of the pan to cool down.

Procedure to make biscuits:
Scale the dry ingredients into a mixing bowl, briefly whisk together, add the baking powder. Then shortening is added and mixed for 1 minute, water is added and the dough is mixed again for 1 minute. The dough was allowed to rest for 10 min. It was then placed onto a floured parchment paper. The top of the dough was floured and pressed down to get an even surface and a height of 1.8 cm. Biscuits were cut out with a diameter of 7 cm. The biscuits were baked for 10-12 min at 220 °C.

The bakery products according to the invention obtained by baking a dough according to the invention have the advantage of reduced sodium content, without impairment of taste, consistency or look. They can be obtained by an industrial baking process in a factory or bakery or as individual product in a household. Baking is accomplished in the manner known per se, time and temperature setting do not need adjustments due to the baking powder.

The method of leavening doughs according to the invention comprises an exchange of the common baking powder from sodium bicarbonate and sodium acid pyrophosphate with the baking powder according to the invention. It is also possible to exchange other baking powders with the baking powder according to the invention.

The method ensures reliable leavening while the bakery products have a reduced sodium content. The exchange of NaHCO₃ with KHCO₃ has no negative effect on the taste. The exchange of the sodium acid pyrophosphate with glucono delta lactone, regardless whether coated or not, leads to a less salty but sweater taste. The drawback of the typical metallic aftertaste of phosphates can be avoided by using glucono delta lactone or coated glucono delta lactone. However, the uncoated glucono delta lactone was found to lack storage stability in baking powders.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example 1 Preparation of samples

The materials listed in table 3 were used to make the baking powder mixtures listed in table 4.

**Table 3**

| abbreviation | Material |
|---|---|
| Sod Bic | Sodium bicarbonate, NaHCO₃, type FCC 0/13 FF from Solvay S.A., BE |
| Pot Bic | Potassium bicarbonate, from Evonik Industries AG, DE** |
| SAPP | Sodium acid pyrophosphate, Na₂H₂P₄O₇, type Levall AR 28 from Innophos Holdings Inc, USA |
| GdL | Glucono delta lactone, C₆H₁₀O₆, type F2500 from Jungbunzlauer International AG, CH |
| GdL90 | GdL F2500 coated with 10 wt.-% oil** |
| GdL80 | GdL F2500 coated with 20 wt.-% oil** |
| GdL70 | GdL F2500 coated with 30 wt.-% oil** |
| Starch | Starch type C-Gel from Cargill Inc., USA |

| | |
|---|---|
| *The following particle size of the potassium bicarbonate was adjusted by milling and sieving: 0.60 wt.-% < 80 µm, 0.40 wt.-% 80 - 100 µm, 99 wt.-% 100 - 250 µm, and 0 % > 250 µm **coated with hydrogenated palm oil by Balchem Inc., USA | |

**Table 4 Baking powder mixtures**

| Sample | Sod Bic | Pot Bic | SAPP | GdL | GdL90 | GdL80 | GdL70 | starch |
|---|---|---|---|---|---|---|---|---|
| standard | 5.35 g | | 7.32 g | | | | | 4.22 |
| control | | 6.37 g | | 11.80 g | | | | 6.06 |
| inv 1 | | 6.37 g | | | 12.98 g | | | 6.00 |
| inv 2 | | 6.37 g | | | | 14.75 g | | 7.04 |
| inv 3 | | 6.37 g | | | | | 16.85 g | 7.74 |

All samples were made by placing the ingredients calculated for 200 g baking powder mixture in a 1 I powder flask, shaking the flask by hand 5 times and then plugging it onto a rotation evaporator. The flasks were rotated 10 minutes at 100 min⁻¹. The baking powder samples were than scaled into 10 g sachets for storage stability tests. The sachets for storage consisted of paper/PE-EVOH/PE laminate, with the PE facing the inside. The sample "standard" represents the common baking powder based on sodium bicarbonate and sodium acid pyrophosphate. The sample "control" was made with uncoated glucono delta lactone. For the storage tests equal total amounts of 10 g per sachet have been filled in the sachets, therefore, depending on the type of baking powder, the absolute CO₂ amount differs per sample.

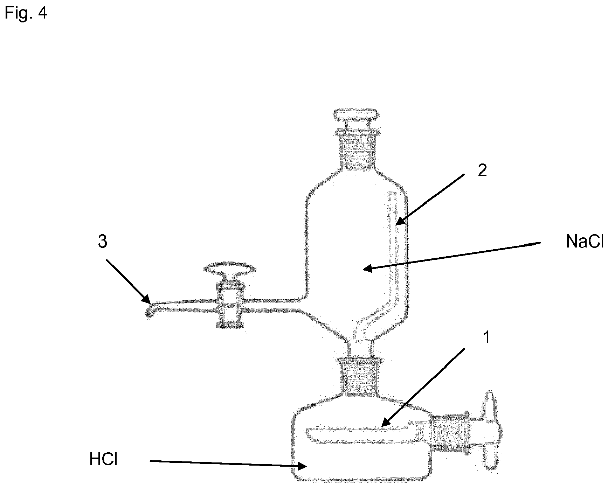

Example 2: Stability of baking powder compositions The stability of the baking powder is of key importance as the reactive mixture is stored as combination of the acid and base. In industrial premixes with flour a residual humidity of 15 % is typical, so any useful baking powder needs to be stable during storage even in the presence of humidity. To evaluate the storage stability the 10 g sachets of the mixtures described above were stored either at ambient conditions or for stressed storage under 75 % relative humidity at 40 °C. The baking powders were analyzed for the amount of carbon dioxide generated before and after storage with the Tillman Heublein method as follows. Into the lower part of a Tilman's apparatus as shown in figure 4, 20 ml 25 % hydrochloric acid were placed with a pipette. Into the upper part saturated sodium chloride solution is filled until the riser pipe 2 emerges about 5 mm. A mass M of 1.00 g baking powder is placed into the vessel 1 and the vessel inserted into the apparatus. While inserting, the plug valve 3 is open to allow pressure equalization. Then a beaker is placed below the plug valve 3, the vessel turned upside down and the sodium chloride solution displaced by the emitted CO₂ is collected in the beaker. To enhance complete conversion the plug valve is closed, the whole apparatus gently shaken and the plug valve opened again after positioning above the beaker. This is repeated until no gas evolves anymore. The collected sodium chloride solution is weighed, its volume V calculated with a density of 1.201 g/ml and the amount of CO₂ calculated from the volume according to CO₂ [g] = V [ml] • 1.84 / 1000 • 100 / M [g].

The results are summarized in table 5 for ambient storage and in table 6 for stressed storage. The tables state for each baking powder combination the theoretical amount of CO₂ and the one obtained after mixing (day 1) as well as after 30 days (only stress storage) and 90 days storage. Given are the total amounts and the percent of theoretical value. All results were obtained from measurements with a minimum of three repetitions.

**Table 5: Results for stability tests ambient storage**

| sample | theoretical amount of CO₂ | | measured amount of CO₂ on day 1 | | measured amount of CO₂ after 90 days | |
|---|---|---|---|---|---|---|
| standard | 15.56 g | 100% | 15.96 g | 103% | 15.43 g | 99% |
| control | 11.55 g | 100% | 11.28 g | 98% | 11.84 g | 102% |
| inv 1 | 10.89 g | 100% | 10.88 g | 100% | 11.13 g | 102% |
| inv 2 | 9.94 g | 100% | 9.64 g | 97% | 10.35 g | 104% |
| inv 3 | 9.05 g | 100% | 9.98 g | 110% | 9.59 g | 106% |

**Table 6: Results for stability tests stressed storage**

| sample | theoretical amount of CO₂ | | measured amount of CO₂ on day 1 | | measured amount of CO₂ after 30 days | | measured amount of CO₂ after 90 days | |
|---|---|---|---|---|---|---|---|---|
| standard | 15.56 g | 100% | 15.96 g | 103% | 12.84 g | 83% | 10.19 g | 65% |
| control | 11.55 g | 100% | 11.28 g | 98% | 0.77 g | 7% | 0.49 g | 4% |
| inv 1 | 10.89 g | 100% | 10.88 g | 100% | 8.38 g | 77% | 4.06 g | 37% |
| inv 2 | 9.94 g | 100% | 9.64 g | 97% | 8.94 g | 90% | 6.14 g | 62% |
| inv 3 | 9.05 g | 100% | 9.98 g | 110% | 8.06 g | 89% | 6.98 g | 77% |

The results in table 5 show that the CO₂ release of samples stored in sachets at ambient conditions is at the same level after 90 days as on day 1. However it is evident from table 6 that the stability is affected by the harsher condition of the stress climate. Already after 30 days, the baking powder containing uncoated GdL with potassium bicarbonate (control) showed a residual CO₂ content of only 7 %, i.e. almost 90 % decay. The standard baking powder showed a residual CO₂ content of 83 %. The products with coated GdL (inv 1 - inv 3) showed a residual CO₂ content of 77 - 90%. After 90 days the samples with GdL80 and GdL90 showed a residual CO₂ content comparable to the standard sodium containing baking powder. Thus, without a coating the GdL is not stable enough for use in a baking powder.

### Example 3: CO₂ development in doughs

The amount of carbon dioxide developed during the preparation of dough was determined on test dough mixtures in a RISOgraph instrument (National Manufacturing, a Division of TMCO Inc, USA). The mixtures contained 20 g hi gluten flour and 30 g water with an amount of baking powder that was calculated for each mixture to be able to give the same amount of carbon dioxide.

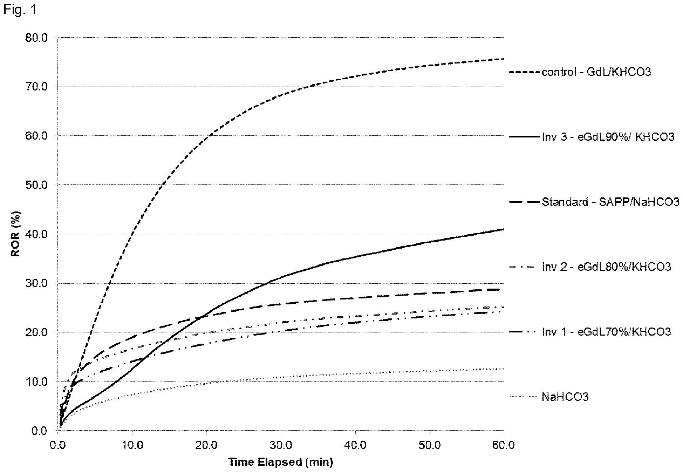

The baking powder to be tested was mixed with flour and water in a container and the container was closed and connected with a hose. The container was then placed into a water bath held at 38 °C and the hose connected to the RISOgraph pressure detecting unit. The RISOgraph determines the volume of carbon dioxide emitted by the mixture within a set time based on the measured pressure rise. For further details see G.E. Rattlin et al., "Measuring yeast CO2 production with the Risograph", Cereal Foods World Vol 54, 2009, pages 261-265 and an instruction manual of the device. The time was chosen as 60 min. here. The measured cumulative CO₂ amounts expressed as percent of the theoretical value are presented in figure 1.

As can be seen from the results in figure 1 the standard baking powder shows a CO₂ development of 28% of the theoretical possible amount over the chosen 60 min of measurement. The control baking powder, containing non-coated GdL in combination with potassium bicarbonate, shows a stronger CO₂ release of more than 75% of the theoretical amount of CO₂. The baking powder according to the invention, sample inv 3, containing a coated GdL with a content of 90% GdL, achieves a CO₂ release of 41%. Samples inv 2 and inv 1 with 80 and 70 % GdL provide a CO₂ release of 25% and 24%, respectively, similar to the standard baking powder. It follows that the sodium free baking powder according to the invention is as effective as the standard sodium containing baking powder.

### Example 4: Baking test muffins

Baking trials were made with muffins. The recipe and procedure was as follows: Muffins were made from dough batches each comprising 1700 g flour, 119 g sugar, 51 g nonfat dry milk, 8.5 g table salt as dry components and 20 g vegetable oil, 63 g water and 50 g sugar as liquid components. The amounts of baking powder used were calculated to correspond to a use of 10.8 g sodium bicarbonate + sodium acid pyrophosphate per 300 g flour. The dough was prepared as follows. At first the dry ingredients were scaled into a mixing bowl and then sifted together three times with a 20M sifter onto parchment. Next, the wet ingredients were scaled in the mixing bowl and combined with a whisk. After that the dry ingredients were added back to the bowl and the dough mixed 1 min., scratched from sides and mixed for another 45 sec. The dough was portioned into a baking cup lined muffin pan, 50.00±0.50g per cup. The dough was baked at 177 °C (350°) in a conventional oven for 21 - 25 min. The muffins were removed from the muffin pan to cool before being analysed.

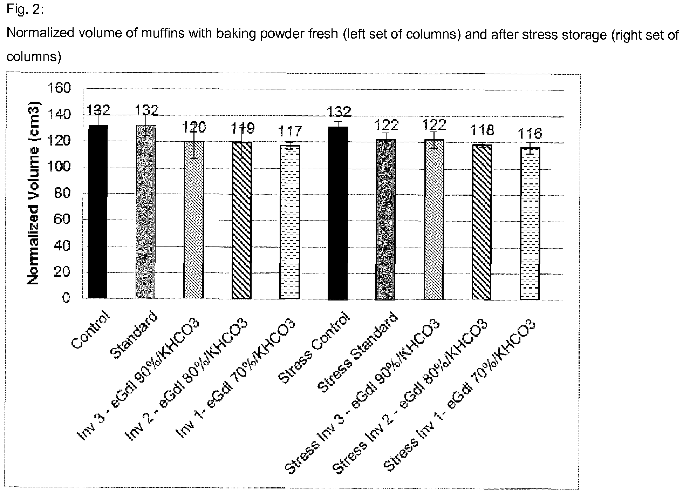

The volume of the baked dough was determined by the Neumann-Method. To this end, a device having two containers connected via a measuring scale is filled in the lower container with rape seed until 0 ml is reached on the scale. Then the device is turned upside down, the baked product inserted into the lower container and the device turned back again. The volume of the product can be read on the scale. The results are presented in figure 2. Each column represents the average volume of 6 muffins. The columns at the left show the results for fresh baking powder, the columns at the right those for baking powder after 4 weeks stress storage.

It can be seen that the volumes of the muffins baked with coated GdL baking powder were slightly lower than the volume of the muffins baked with standard baking powder. Taking the standard deviation into account only the muffins with baking powder inv 1 had a significantly smaller volume than the standard. The control with uncoated GdL had the same volume as the standard before storage, but stressed storage decreased it by 7.6 %.

### Example 5: Baking test scones

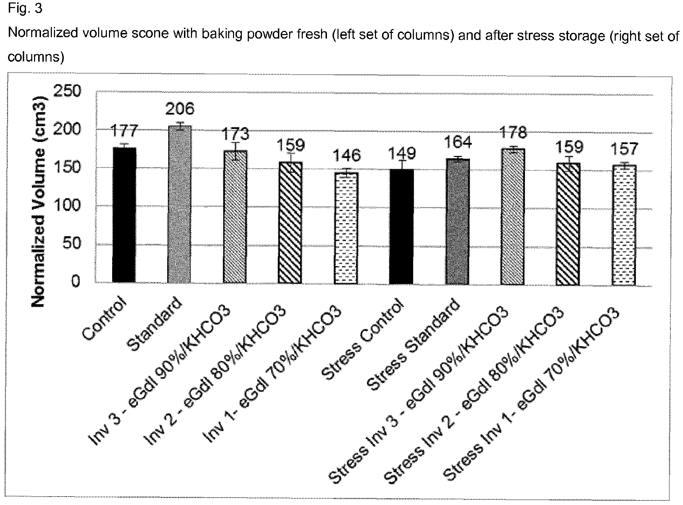

Further baking trials were made with scones. Scones or cream biscuits are sensitive products regarding leavening systems because of their short baking time. They are a typical European recipe with a harder and shorter baking process. The dough batches comprised 300 g flour, 45 g sugar, 11.25 g dextrose, 6.75 g buttermilk powder, 3.75 g table salt, and optionally 60 g inclusions as dry components and 180 g water, 45 g shortening as liquid components. The amounts of baking powder used were calculated to correspond to a use of 10.8 g sodium bicarbonate + sodium acid pyrophosphate per 300 g flour. The dough was made as follows. The dry ingredients were scaled into the bowl of a Hobart N-50 mixer and sifted together three times with 20M screen. Then shortening was added to the bowl and mixed on speed 1 with the paddle attachment for one minute. Next water was added and mixed on speed 1 for 1 minute. The bowl and paddle were scraped and another mixing for an additional 1.5 min on speed 1 took place. The dough was covered and rested for 10 minutes. It was then sheeted to 18 mm thickness and rested for another 10 minutes. Biscuits were cut using a 7.0 cm round cutter and rested for another 10 minutes. The biscuits were baked at 218 °C (425°F) in a conventional oven for 10-12 minutes. The volume of the baked scones was determined as described in example 3. The results are shown in figure 3.

The results indicate that the longer time for dough development had a positive effect on the leavening effect of the baking powder with coated GdL. The stress storage treated sample inv 1 shows the same result regarding volume as the freshly made standard. The standard as well as the control significantly lost leavening power when stress storage treated compared to freshly made samples. The fresh made inv 2 and inv 3 provided less leavening capacity than the standard and did not lose or gain functionality after being stored under stress conditions.

### Example 6: Scale up

The same tests as before were made with a baking powder from GdL F2500 coated with either 20 or 15 % by weight hydrogenated palm oil on a commercial scale plant. The obtained coated GdL had the following particle size distributions (determined by sieving):
a) coated with 20 % oil: 0.3 % <100µm, 32.0 % 100 - 250 µm, 43.2 % 250 - 300 µm, 12.8 % 300 - 400 µm, 11.7 % > 400 µm;
b) coated with 15 % oil: 0.3 % < 100µm, 30.0 % 100 - 250 µm, 44.5 % 250 - 300 µm, 13.2% 300 - 400 µm, 12.0 % > 400 µm.

The KHCO₃ used was milled on a production scale mill, and had the following particle size distribution: 8.60 % < 100 µm, 53.6 % 100 - 250 µm, 37.5 % 250 - 400 µm, 0.3 % > 400 µm. The main difference to the pilot line samples in examples 1 to 5 is that particles < 100 µm were not separated by sieving. The baking powder samples are designated Inv 4, 20 wt.-% oil, and Inv 5, 15 wt.-% oil, respectively, in the following.

The sample baking powders Inv 4 and Inv 5 as well as a standard and a control sample (with the production scale KHCO₃) were packed into sachets and stored. The recovery of the theoretical CO₂ after storage under ambient conditions and after stress storage are reported in table 7, the results for new comparison samples, standard: SAPP/NaHCO₃ and control: uncoated GdL/KHCO₃, are presented, too.

**Table 7**

| **sample** | **Day 0** | **2 months ambient** | **2 weeks stress storage** | **4 weeks stress storage** |
|---|---|---|---|---|
| standard | 96.46 % | 98.04 % | 90.27 % | 74.31 % |
| control | 99.54 % | 104.68 % | test impossible | test impossible |
| Inv 4 | 107.83 % | 99.14% | 100.45 % | 70.83 % |
| Inv 5 | 105.18 % | 97.81 % | 84.85 % | 57.18 % |

Thus, comparing the stability results during storage of the baking powder samples from the pilot plant in example 2 with the ones from the commercial scale plant shows that more oil was necessary to achieve optimal storage stability.

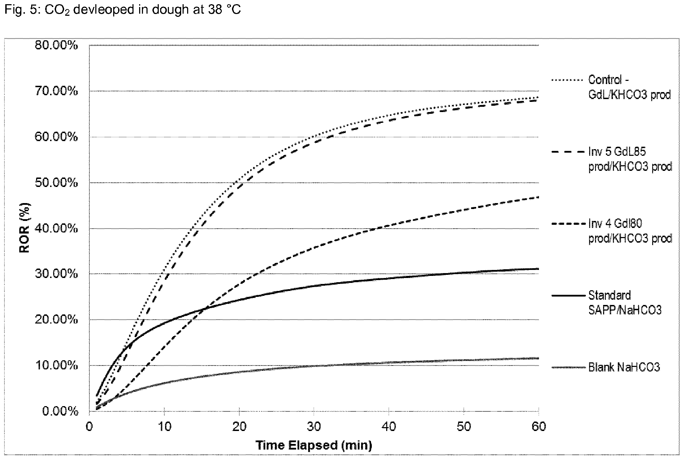

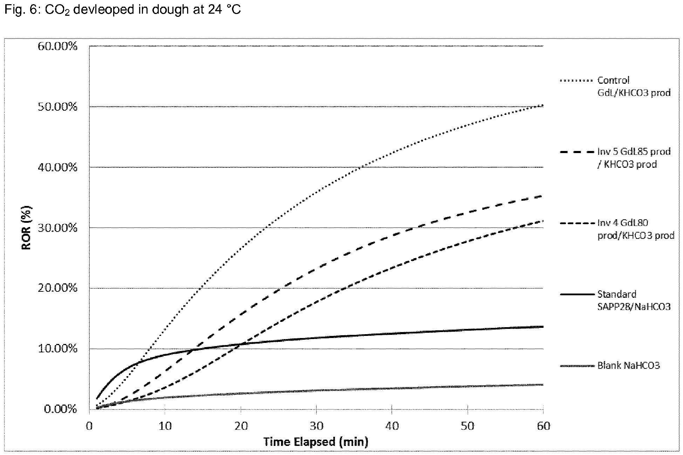

The test on CO₂ development in doughs measured with the RISOgraph confirmed this, see figures 5 and 6 illustrating the results at measurement temperatures of 38 °C and 24 °C, respectively.

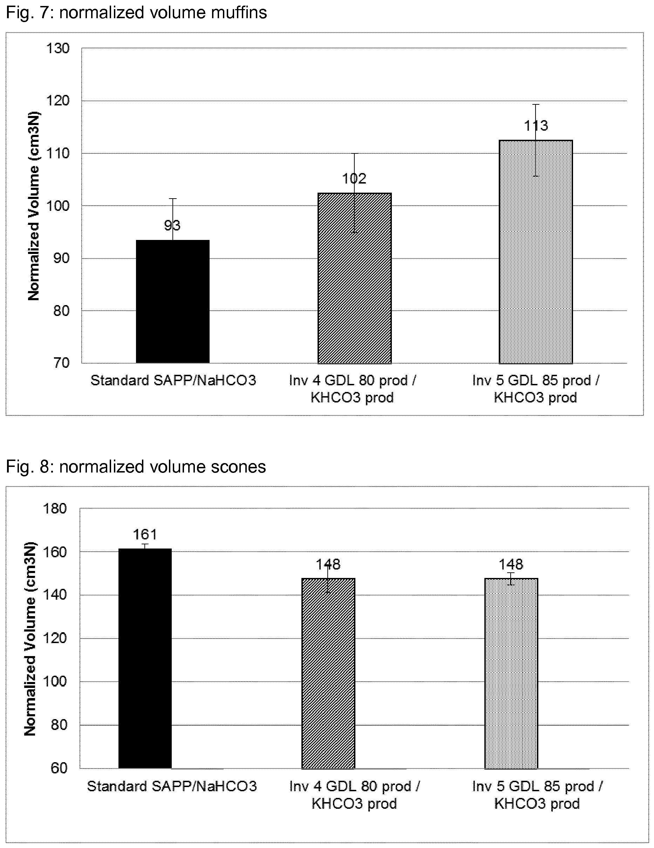

The results of the baking trials for muffins and scones showed the following trends: For the muffins the normalized volumes for Inv 4 and Inv 5 were higher than the standard, see figure 7. For the scones, that are baked at higher temperatures, the normalized volumes of Inv4 and Inv5 were slightly lower than the standard.

## Claims

1. Sodium free baking powder comprising potassium bicarbonate and coated glucono delta lactone.

2. Baking powder according to claim 1, **characterized in that** particles of the potassium bicarbonate have a median diameter D₅₀ from 10 to 300 µm, with a maximum particle size of ≤ 500 µm and ≤ 15 % by weight of particles smaller than 100 µm.

3. Baking powder according to claim 1 or 2, **characterized in that** the glucono delta lactone is coated with a hydrogenated edible oil, preferably with a vegetable oil, most preferred with a hydrogenated palm oil, cotton seed oil or sunflower oil.

4. Baking powder according to anyone of claims 1 to 3, **characterized in that** the weight ratio potassium bicarbonate:glucono delta lactone ranges from 1:1 to 1:2.5, preferably from 1:1.5 to 1:2.0 and most preferred from 1:1.75 to 1:1.85.

5. Baking powder according to anyone of claims 1 to 4, **characterized in that** it comprises additives selected from the group consisting of processing aids, stabilizers, and anti-caking agents.

6. Baking powder according to claim 5, **characterized in that** the additives are contained in an amount of below 2 % by weight, preferably of below 1.5 % by weight and most preferred of below 1 % by weight.

7. Dough containing a sodium free baking powder comprising potassium bicarbonate and coated glucono delta lactone.

8. Dough according to claim 7, wherein particles of the potassium bicarbonate have a median diameter D₅₀ from 10 to 300 µm with a maximum particle size of ≤ 500 µm and ≤ 15 % by weight of particles smaller than 100 µm.

9. Dough according to claim 7 or 8, wherein the glucono delta lactone is coated with a hydrogenated edible oil, preferably with a vegetable oil, most preferred with a hydrogenated palm oil, cotton seed oil or sunflower oil.

10. Dough according to anyone of claims 7 to 9, wherein the weight ratio potassium bicarbonate:glucono delta lactone ranges from 1:1 to 1:2.5, preferably from 1:1.5 to 1:2.0 and most preferred from 1:1.75 to 1:1.85.

11. Bakery product made with a sodium free baking powder comprising potassium bicarbonate and coated glucono delta lactone according to anyone of claims 1 to 6.

12. Method of leavening doughs, wherein a sodium free baking powder comprising potassium bicarbonate and coated glucono delta lactone according to anyone of claims 1 to 6 is mixed into the dough as a leavening agent.

13. Method according to claim 12, wherein the amount of baking powder used is from 2.0 % by weight to 5.0 % by weight, preferably from 2.8 % by weight to 4.6 % by weight, relative to the total mass of the flour in the dough.

14. Method according to claim 12 or 13, wherein no additional leavening agent is used or one of yeast and sour dough is used as additional leavening agent.

15. Method according to anyone of claims 12 to 14, wherein the rate of reaction of the baking powder is adjusted by the amount of coating used for coating the glucono delta lactone.
